(19) Europäisches Patentamt
European Patent Office
Office européen des brevets

(11) Veröffentlichungsnummer: **0 114 234**
**B1**

(12) # EUROPÄISCHE PATENTSCHRIFT

(45) Veröffentlichungstag der Patentschrift: **01.04.87**

(51) Int. Cl.⁴: **H 01 M 10/39**, C 04 B 35/10, C 01 F 7/02

(21) Anmeldenummer: **83111473.1**

(22) Anmeldetag: **17.11.83**

(54) **Festelektrolyt.**

(30) Priorität: **24.12.82 DE 3247967**

(43) Veröffentlichungstag der Anmeldung: **01.08.84 Patentblatt 84/31**

(45) Bekanntmachung des Hinweises auf die Patenterteilung: **01.04.87 Patentblatt 87/14**

(84) Benannte Vertragsstaaten: **BE FR GB IT NL**

(56) Entgegenhaltungen:
**EP - A - 0 064 226**
**DE - A - 2 738 413**
**DE - B - 1 596 078**
**GB - A - 1 507 426**
**US - A - 4 138 455**

(73) Patentinhaber: **BROWN, BOVERI & CIE Aktiengesellschaft, Kallstadter Strasse 1, D-6800 Mannheim 31 (DE)**

(72) Erfinder: **Harbach, Friedrich, Dr. Dipl.-Phys., Bürgerstrasse 2, D-6900 Heidelberg 1 (DE)**

(74) Vertreter: **Kempe, Wolfgang, Dr. et al, c/o BROWN, BOVERI & CIE AG Kallstadter Strasse 1 Postfach 351, D-6800 Mannheim 31 (DE)**

EP 0 114 234 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen Festelektrolyten gemäss dem Oberbegriff des Patentanspruches 1.

Solche Festelektrolyte finden ihre Anwendung, z.B., in Na/S-Speicherzellen, die für den Aufbau von Hochtemperaturspeicherbatterien benutzt werden.

In wiederaufladbaren elektrochemischen Speicherzellen auf der Basis von Natrium und Schwefel sind die Reaktandenräume durch einen natriumionenleitenden Festelektrolyten voneinander getrennt. Die in den Speicherzellen verwendeten Festelektrolyten, die beispielsweise aus Beta-Aluminiumoxid gefertigt sind, zeichnen sich dadurch aus, dass die Teilleitfähigkeit des beweglichen Ions sehr hoch und die Teilleitfähigkeit der Elektronen um vielfache Zehnerpotenzen kleiner ist. Durch die Verwendung solcher Festelektrolyten für den Aufbau von elektrochemischen Speicherzellen wird erreicht, dass praktisch keine Selbstentladung stattfindet, da die Elektronenleitfähigkeit vernachlässigbar ist, und die Reaktionssubstanzen auch nicht als neutrale Teilchen durch den Festelektrolyten gelangen können. Ein Vorteil dieser Speicherzellen besteht darin, dass beim Laden keine elektrochemischen Nebenreaktionen ablaufen. Der Grund dafür ist wiederum, dass nur eine Ionensorte durch den Festelektrolyten gelangen kann. Die Stromausbeute einer solchen Speicherzelle liegt daher etwa bei 100%.

Vorzugsweise kommen für den Aufbau von Hochtemperatur-Speicherbatterien Speicherzellen auf der Basis von Natrium und Schwefel zum Einsatz.

Der Einsatz von Beta-Aluminiumoxiden in Form von keramischen Bauteilen in Natrium/Schwefel-Speicherzellen und in anderen elektrochemischen Zellen, die auf dem praktisch ausschliesslichen Durchtritt von Natriumionen oder anderen Alkali- oder Erdalkaliionen, von Silberionen, von Protonen oder protonentransportierenden Verbindungen unter dem Einfluss eines Gradienten des elektrochemischen Potentials beruhen, ist aus der DE-PS 1 596 077 bekannt. Das typische natriumionenleitende Beta-Aluminiumoxid besteht in erster Linie zu 80 bis 95% aus Aluminiumoxid und zu 5 bis 12% aus Natriumoxid, dabei ist es in der oxidkeramischen Technologie üblich, die Zusammensetzungsanteile massenmässig auf die Oxide der vorliegenden Metalle zu beziehen.

Aus dieser Zusammensetzungsangabe ist bereits zu ersehen, dass Beta-Aluminiumoxid keine Strukturmodifikation der chemischen Verbindung Aluminiumoxid ($Al_2O_3$) sein kann, wie dies etwa für $\alpha$-$Al_2O_3$ oder $\gamma$-$Al_2O_3$ gilt. Der irreführende Name Beta-Aluminiumoxid ist historisch begründet; Natriumoxid ($Na_2O$) oder chemisch verwandte Verbindungen wie andere Alkalimetalloxide, Erdalkalimetalloxide, Silberoxid, Wasser oder andere Wasserstoff enthaltende Verbindungen sind wesentlicher Bestandteil dieser chemischen Verbindung.

Es gibt mindestens vier verschiedene Beta-Aluminiumoxidstrukturen, nämlich $\beta$-, $\beta''$-, $\beta'''$- und $\beta''''$-$Al_2O_3$, die als gemeinsames Merkmal den Aufbau aus mehreren aufeinanderfolgenden, dichtgepackten Sauerstofflagen aufweisen, die blockweise von zweidimensional ausgedehnten parallelen Schichten mit reduziertem Sauerstoffgehalt getrennt werden. Diese Zwischenschichten enthalten neben den Sauerstoffionen die beweglichen, für den Einsatz der Beta-Aluminiumoxide als Festelektrolyte wesentlichen Ionen. Von den oben aufgeführten Phasen werden die $\beta$- und die $\beta''$-$Al_2O_3$-Phase bevorzugt. $\beta$-$Al_2O_3$ hat die theoretische Zusammensetzung $A_2O \cdot 11\ Al_2O_3$. Die Symmetrie der Struktur gehört zur Raumgruppe $P6_3/mmc$. Die Einheitszelle hat einen sich wiederholenden kristallografischen Abstand längs der c-Achse von etwa 2,2 nm. Dem $\beta''$-$Al_2O_3$ wird üblicherweise die theoretische Zusammensetzung $A_2O \cdot 5{,}33\ Al_2O_3$ zugeordnet. $\beta''$-$Al_2O_3$ kristallisiert in der Raumgruppe $R\bar{3}m$. Der kristallografische Abstand längs der c-Achse der dreifach-primitiven hexagonalen Elementarzelle beträgt etwa 3,4 nm. In den Formeln für die Zusammensetzung steht A stellvertretend für ein Alkalimetall, für Silber oder Wasserstoff und bestimmt die innerhalb des Festelektrolyten beweglichen Ionen. Für die mögliche ersatzweise Berücksichtigung von Erdalkalimetallen oder wasserstoffhaltigen Verbindungen können die obigen Formen leicht umgeändert werden. Die anderen Symbole haben die übliche chemische Bedeutung.

Von den beiden zuletzt genannten Phasen weist wiederum die $\beta''$-$Al_2O_3$-Phase die höhere Alkaliionen-Leitfähigkeit auf. Die deswegen üblicherweise angestrebte $\beta''$-$Al_2O_3$-Phase und die üblicherweise weniger erwünschte $\beta$-$Al_2O_3$-Phase lassen sich mit herkömmlichen Röntgenbeugungstechniken (z.B. mit dem Bragg-Brentano-Diffraktometer) aufgrund ihrer Symmetrie unterscheiden. Es ist daher mittlerweile Stand der Technik, Beta-Aluminiumoxid-Keramiken herzustellen, die röntgenographisch zum weitaus überwiegenden Teil aus der $\beta''$-$Al_2O_3$-Phase bestehen, was wiederum nur auf dem röntgenographischen Wege festgestellt werden kann.

Aus der DE-AS 1 596 078 ist ein kationisch leitender, kristalliner fester Elektrolyt aus einem Mischkristallgitter und Kationen, die bezüglich des Kristallgitters unter Einfluss eines elektrischen Feldes wandern, sowie dessen Anwendung und Herstellung bekannt. Die hierin offenbarte Keramik enthält neben Natriumoxid das Oxid eines weiteren Metalls. Als weiteres Metalloxid wird vorzugsweise Magnesium bzw. Lithium verwendet. Das Gewichtsverhältnis von Natriumoxid zu dem weiteren Metalloxid beträgt mindestens 2:1.

In der DE-OS 2 738 413 ist ein Festelektrolytmaterial aus Betaaluminiumoxid beschrieben. Das keramische Material besteht im wesentlichen aus

Natriumoxid, Magnesiumoxid, Lithiumoxid. Der Rest wird durch Aluminiumoxid gebildet.

Aus der DE-PS 1 596 078 ist die Zugabe von Dotierungsstoffen bereits bekannt. Diese Dotierungsstoffe dienen neben der Erniedrigung des Widerstandes eines keramischen Bauteils aus Beta-Aluminiumoxid gegen eine Wanderung der beweglichen Kationen unter dem Einfluss eines Gradienten des elektrochemischen Potentials auch der thermischen Stabilisierung der $\beta''$-$Al_2O_3$-Struktur während des Keramikbrandes.

Die Zuschläge von Lithium, Magnesium oder ähnlichen Metallen mit einer Wertigkeit nicht grösser als 2 betragen bei Festelektrolytkeramiken, die nach den bekannten Verfahren hergestellt sind, durchweg weniger als drei Massen-%. Die bekannten magnesiumdotierten natriumionenleitenden Beta-Aluminiumoxid-Keramiken enthalten durchweg zwischen 7 und 9% $Na_2O$ und zwischen 1,5 und 2,5% MgO während der Rest aus $\beta''$ $Al_2O_3$ besteht.

Neuere Untersuchungen unter Benutzung einer höher auflösenden Röntgenbeugungstechnik (Guinier-Kamera) haben gezeigt, dass die bekannten Herstellungsverfahren unter Verwendung der genannten Zusammensetzungen nicht zu einer einphasigen $\beta''$-$Al_2O_3$-Festelektrolytkeramik führen. Vielmehr weisen die so hergestellten Keramiken (u.U. neben einem auch noch vorhandenen $\beta$-$Al_2O_3$-Phasenbestand) zwei $\beta''$-$Al_2O_3$-Teilphasen auf.

Beide Teilphasen besitzen unterschiedliche Qualitäten im Hinblick auf die Verwendbarkeit als Festelektrolytkeramik. Eine dieser Teilphasen enthält die Zusätze an Metallionen mit einer Wertigkeit nicht grösser als 2 nicht in ausreichendem Masse, um einen strukturbezogenen Ladungsausgleich der vorhanden beweglichen Kationen ohne Mitwirkung von Gitterdefekten wie Aluminiumleerstellen und/oder Zwischengitter-Sauerstoffionen zu gewährleisten. Es handelt sich sozusagen um eine teilstabilisierte Phase. Die zweite Teilphase enthält gerade soviele Zusätze an Metallionen mit einer Wertigkeit nicht grösser als 2, dass zum strukturbezogenen Ladungsausgleich der vorhandenen beweglichen Kationen keine weiteren Gitterdefekte ausser dem Einbau dieser Zusätze anstelle von Aluminiumionen erforderlich sind. Es handelt sich hierbei also um eine vollstabilisierte Phase.

Der Erfindung liegt ausgehend von dem eingangs genannten Stand der Technik die Aufgabe zugrunde, einen Festelektrolyten aus einem röntgenographisch einphasigen vollstabilisierten $\beta''$-$Al_2O_3$ zu schaffen.

Diese Aufgabe wird erfindungsgemäss durch die kennzeichnenden Merkmale des Patentanspruches 1 gelöst.

Der erfindungsgemässe Festelektrolyt weist im Temperaturbereich von 200 bis 400°C eine höhere elektrische Leitfähigkeit für die beweglichen Ionen und eine geringere Temperaturabhängigkeit der elektrischen Leitfähigkeit auf als die zum Stand der Technik gehörenden Festelektrolytkeramiken. Ein Festelektrolyt mit den erfindungsgemässen Zusammensetzungen zeigt weiterhin eine verbesserte thermische Stabilität, insbesondere tritt bei Temperaturen, die zur Herstellung eines dichten keramischen Körpers aus diesem Werkstoff erforderlich sind, keine Umbildung der $\beta''$-$Al_2O_3$-Phase in die weniger erwünschte $\beta$-$Al_2O_3$-Phase auf. Des weiteren weist die vollstabilisierte einphasige $\beta''$-$Al_2O_3$-Keramik des Festelektrolyten eine grössere Resistenz gegen atmosphärische Einflüsse auf als die bisher bekannt gewordenen Keramiken. Sie reagiert insbesondere wesentlich schwächer und zudem langsamer mit Feuchtigkeit. Dies bedeutet wiederum eine geringere mechanische Belastung der Struktur dieser Phase. Eine Festelektrolytkeramik, die nur eine vollstabilisierte $\beta''$-$Al_2O_3$-Phase aufweist, bietet die Möglichkeit einer problemloseren Handhabung und gewährleistet zudem die Verringerung der Gefahr feuchtigkeitsbedingter Betriebsprobleme bei ihrem Einsatz in elektrochemischen Zellen.

Inwieweit das Endprodukt eine korrekte Zusammensetzung aufweist, kann durch Strukturbeugungstechniken mit hinreichendem Auflösungsvermögen festgestellt werden. Eine derartige Technik ist die Röntgenbeugung. Sie wird an einem Probestück der erfindungsgemässen Keramik, das hierbei auch als feingemahlenes Pulver verwendet werden kann, durchgeführt. Für die Untersuchung wird bevorzugt eine Guinier-Kamera unter Verwendung von monochromatischer Röntgenstrahlung eingesetzt, wobei die Registrierung der gebeugten Strahlung am besten auf einem einseitig beschichteten Film erfolgt. Das experimentelle Auflösungsvermögen muss dabei so sein, dass zwei Reflexe, die z.B. für Cu-K$\alpha$1-Strahlung der Wellenlänge 0,154 nm (1,54051 Å) von einer Probe unter dem doppelten Beugungswinkel 2Θ zwischen 30° bis 40° mit jeweils einer Breite bei halber maximaler Intensität (Halbwertsbreite) von weniger als 0,03° und einem Abstand von mehr als 0,07° erzeugt werden, bei der Registrierung getrennt erkennbar sind. Es muss ausserdem sichergestellt sein, dass die Lagerung der fertigen Keramiken und des ggf. anschliessend daraus hergestellten feingemahlenen Pulvers bis zur Strukturuntersuchung nicht zu einer Feuchtigkeitsaufnahme führt. Eine derartige Feuchtigkeitsaufnahme beträfe bevorzugt unerwünschte teilstabilisierte $\beta''$-$Al_2O_3$-Phasen. Röntgenlinien, die nur diesen Phasen zugeordnet sind, würden durch Strukturveränderungen dieser Phasen, die durch die Feuchtigkeitsaufnahme verursacht würden, verschoben und könnten mit zunächst getrennten Röntgenlinien der erfindungsgemäss vollstabilisierten Phase zusammenfallen, so dass ungünstigstenfalls das Vorliegen einer erfindungsgemäss unerwünschten Teilphase nicht festgestellt werden könnte. Geringfügige Feuchtigkeitsaufnahmen können bei einem natriumionenleitenden Festelektrolyten durch zweistündiges Ausheizen bei 800°C und anschliessendes Abkühlen unter inerter Atmosphäre rückgängig gemacht werden.

Die erfindungsgemässe Keramik zeigt unter diesen Bedingungen bei der Röntgenbeugung mit der oben angegebenen Strahlung zwischen 20–34,5° und 34,9° nur einen Reflex; dieser Reflex hat zudem eine Halbwertsbreite von höchstens 0,1°.

Für die erfindungsgemässe natriumionenleitende Festelektrolytkeramik lautet die allgemeine Formel, nach welcher ihre Herstellung, insbesondere ihre Zusammensetzung erfolgt:

$$Na_{1+z_1}Mg_{z_1}Al_{11-z_1}O_{17}$$

bzw. in einer der keramischen Praxis bevorzugten oxidischen Darstellung:

$$(1+z_1)Na_2O; (2z_1)MgO; (11-z_1)Al_2O_3.$$

Dabei liegt der Wert von $z_1$ zwischen 0,6 und 0,8.

Bei einer bevorzugten Ausführungsform weist $z_1$ einen Wert zwischen 0,68 und 0,78 auf. Hiermit kann die beste einphasige vollstabilisierte $\beta''$-$Al_2O_3$-Keramik hergestellt werden.

Die Zusammensetzung der Festelektrolytkeramik lässt sich dann auch gemäss der Formel darstellen:

$$Na_{1,73}Mg_{0,73}Al_{10,27}O_{17}$$

Die Verwendung des erfindungsgemässen Festelektrolyten in einer elektrochemischen Speicherzelle wird nachfolgend anhand einer Zeichnung erläutert:

In der Figur ist eine elektrochemische Speicherzelle 1 auf der Basis von Natrium und Schwefel dargestellt. Die Speicherzelle 1 ist durch ein metallisches Gehäuse 2 begrenzt, das bei dem hier dargestellten Ausführungsbeispiel becherförmig ausgebildet ist. Vorzugsweise ist es aus Aluminium oder einem warmfesten Stahl gefertigt. Das Gehäuse 2 weist an seinem oberen offenen Ende einen nach innen weisenden Flansch 2F auf. Im Inneren des becherförmigen Gehäuses 2 ist ein ebenfalls becherförmig ausgebildeter Festelektrolyt 3 angeordnet, der an seinem oberen Ende einen nach aussen weisenden Flansch 3F aufweist. Der Flansch wird durch einen Isolierring aus Alpha-Aluminiumoxid-Keramik gebildet und ist über ein Glaslot (hier nicht dargestellt) mit dem Festelektrolyten 3 verbunden. Der Flansch 3F ist unter Zwischenfügung einer Dichtung 4 auf den nach innen weisenden Flansch 2F des Gehäuses 2 aufgesetzt und abgestützt. Die Abmessungen des Festelektrolyten 3 sind so gross gewählt, dass zwischen seinen Aussenflächen und den Innenflächen des Gehäuses 2 rundum ein zusammenhängender Zwischenraum 5 verbleibt, der bei dem hier dargestellten Ausführungsbeispiel als Kathodenraum dient. Dieser ist mit einem Graphitfilz ausgefüllt, der mit Schwefel getränkt ist. Das Innere des Festelektrolyten 3 dient als Anodenraum 6. Für die Aufnahme des Natriums ist innerhalb des Festelektrolyten 3 ein Sicherheitsbehälter 7 angeordnet. Die Abmessungen des Sicherheitseinsatzes 7 sind so bemessen, dass zwischen ihm und dem Festelektrolyten rundum ein schmaler Spalt 8 verbleibt. Der Sicherheitseinsatz 7 besitzt an seinem nach unten weisenden Ende eine Öffnung 9, über welche das Natrium in den Sicherheitsspalt 8 austreten kann. In den Anodenraum, insbesondere in den Sicherheitseinsatz 7, ragt ein anodischer Stromabnehmer 10, der durch einen Stab aus Metall gebildet wird. Der Anodenraum wird nach aussen hin durch eine Platte 11 verschlossen. Diese ist über eine Dichtung 12 auf dem Flansch 3F des Festelektrolyten 3 abgestützt. Der anodische Stromabnehmer 10 ist mit seinem zweiten Ende durch eine Öffnung 13 in der Platte 11 nach aussen geführt und steht einige Millimeter über die Speicherzelle 1 über.

Der für die Leitung von Kationen, insbesondere der Natriumionen aus dem Anodenraum 6 in den Kathodenraum 5 vorgesehene Festelektrolyt 3 besteht erfindungsgemäss aus einer einphasigen vollstabilisierten $\beta''$-$Al_2O_3$-Keramik. Die den Festelektrolyten 3 bildende Keramik wird entsprechend der nachfolgenden Formel:

$$(1+z_1)Na_2O; (2z_1)MgO; (11-z_1)Al_2O_3.$$

Vorzugsweise weist $z_1$ hierbei einen Wert zwischen 0,68 und 0,78 auf.

Für die Herstellung des in der hier gezeigten Ausführungsform verwendeten becherförmigen natriumionenleitenden Festelektrolyten aus $\beta''$-$Al_2O_3$-Keramik wird von einer Mischung aus Aluminiumoxid, Natriumoxid und Magnesiumoxid und/oder von Werkstoffen ausgegangen, die sich unter Wärmezufuhr in die oben genannten benötigten Oxide und/oder in Materialien umwandeln, welche die Verbindungen aus diesen Oxiden darstellen.

Anschliessend wird mit Hilfe einer Form aus diesem Gemisch ein Rohling gepresst, der zur Erzielung der gewünschten Festigkeit anschliessend gebrannt wird.

Beispielsweise kann eine solche Keramik aus einem Pulver gebildet werden, das 8,07% $Na_2O$ und 3,34% MgO und $Al_2O_3$ enthält. Nach dem Brennen des becherförmigen Festelektrolyten weist seine Keramik eine Zusammensetzung auf, die 7,72% $Na_2O$ und 3,35% MgO umfasst, wobei der Rest aus $Al_2O_3$ besteht. Diese Zusammensetzung entspricht der Erfindung. Sie ergibt sich aus der spezifizierten Formel (2), wenn für $z_1$ ein Wert von 0,5 eingesetzt wird. Diese erfindungsgemässe, einphasige vollstabilisierte $\beta''$-$Al_2O_3$-Keramik weist bei der Röntgenbeugungsuntersuchung im Bereich 34,5° bis 34,9° nur einen Reflex bei 34,56° auf. Sie hat eine Dichte von 3,21 g/cm³. Bei 300°C weist sie einen spezifischen Widerstand von 5,3 Ohm × cm auf. Die Aktivierungsenergie im Temperaturbereich 200°C bis 400°C beträgt 24 kg/mol.

Eine ebenfalls röntgenographisch vollstabilisierte einphasige $\beta''$-$Al_2O_3$-Keramik kann aus einer Pulvermischung hergestellt werden, die eine Zusammensetzung von 8,92% $Na_2O$ und

4,42% MgO umfasst, wobei der Rest aus $Al_2O_3$ besteht. Nach dem Brennen weist die Keramik des Festelektrolyten eine Zusammensetzung von 8,53% $Na_2O$ und 4,44% MgO auf, wobei der Rest $Al_2O_3$ ist. Die Zusammensetzung der Keramik wird durch die spezifizierte Formel (2) bestimmt, indem für $z_1$ ein Wert von 0,67 eingesetzt wird. Die erfindungsgemässe Keramik hat eine Dichte von 3,21 g/cm³ und bei 300°C einen spezifischen Widerstand von 4,3 Ohm × cm. Ihre Aktivierungsenergie beträgt 19 kJ/mol. Entsprechend dem Ziel der Erfindung weist die Keramik bei der Röntgenbeugungsuntersuchung im Bereich 34,5° bis 34,9° nur einen Reflex bei 34,66° auf.

Aus Pulver der Zusammensetzung 9,59% $Na_2O$ und 5,28% MgO, wobei der Rest aus $Al_2O_3$ besteht, kann eine Keramik der Zusammensetzung 9,17% $Na_2O$ und 5,30% MgO, Rest $Al_2O_3$, gebrannt werden. Diese Zusammensetzung wird durch spezifizierte Formel (2) bestimmt, indem für $z_1$ ein Wert von 0,80 eingesetzt wird. Die erfindungsgemässe Keramik weist bei der Röntgenbeugungsuntersuchung im Bereich 34,5° bis 34,9° nur einen Reflex bei 34,80° auf. Sie hat eine Dichte von 3,19 g/cm³ und bei 300°C einen spezifischen Widerstand von 4,3 Ohm × cm. Ihre Aktivierungsenergie beträgt 18 kJ/mol.

**Patentansprüche**

1. Festelektrolyt aus einer Keramik auf der Basis von Aluminiumoxid und Natriumoxid dadurch gekennzeichnet, dass die Keramik des natriumionenleitenden Festelektrolyten eine Zusammensetzung gemäss der Formel

$(1+z_1)Na_2O; (2z_1)MGO; (11-z_1)Al_2O_3$

aufweist und $z_1$ einen Wert zwischen 0,6 und 0,8, vorzugsweise zwischen 0,68 und 0,78, aufweist und röntgenographisch zu 100% aus einer vollstabilisierten $\beta''$-$Al_2O_3$-Phase besteht.

2. Festelektrolyt nach Anspruch 1, dadurch gekennzeichnet, dass die Keramik des natriumionenleitenden Festelektrolyt die Zusammensetzung

$Na_{1,73}Mg_{0,73}Al_{10,27}O_{17}$

aufweist.

**Claims**

1. Solid electrolyte consisting of a ceramic material based on alumina and sodium oxide, characterized in that the ceramic material of the sodium ion-conductive solid electrolyte has a composition according to the formula

$(1+z_1)Na_2O; (2z_1)MgO; (11-z_1)Al_2O_3$

wherein $z_1$ has a value between 0.6 and 0.8, preferably between 0.68 and 0.78, and consists, according to X-ray analysis, to the extent of 100% of a fully stabilized $\beta''$ $Al_2O_3$ phase.

2. Solid electrolyte according to claim 1, characterized in that the ceramic material of the sodium ionconductive solid electrolyte has the composition

$Na_{1.73}Mg_{0.73}Al_{10.27}O_{17}$.

**Revendications**

1. Electrolyte solide constitué d'une céramique à base d'oxyde d'aluminium et d'oxyde de sodium, caractérisé par le fait que la céramique de l'électrolyte solide conducteur à ions sodium présente une composition selon la formule

$(1+z_1)Na_2O; (2z_1)MgO; (11-z_1)Al_2O_3$

et $z_1$ a une valeur comprise entre 0,6 et 0,8, de préférence entre 0,68 et 0,78, et qu'elle se révèle à la radiographie être constituée pour 100% d'une phase d'$Al_2O_3$-$\beta''$ entièrement stabilisée.

2. Electrolyte solide selon la revendication 1, caractérisé par le fait que la céramique de l'électrolyte solide conducteur à ions sodium présente la composition

$Na_{1,73}Mg_{0,73}Al_{10,27}O_{17}$

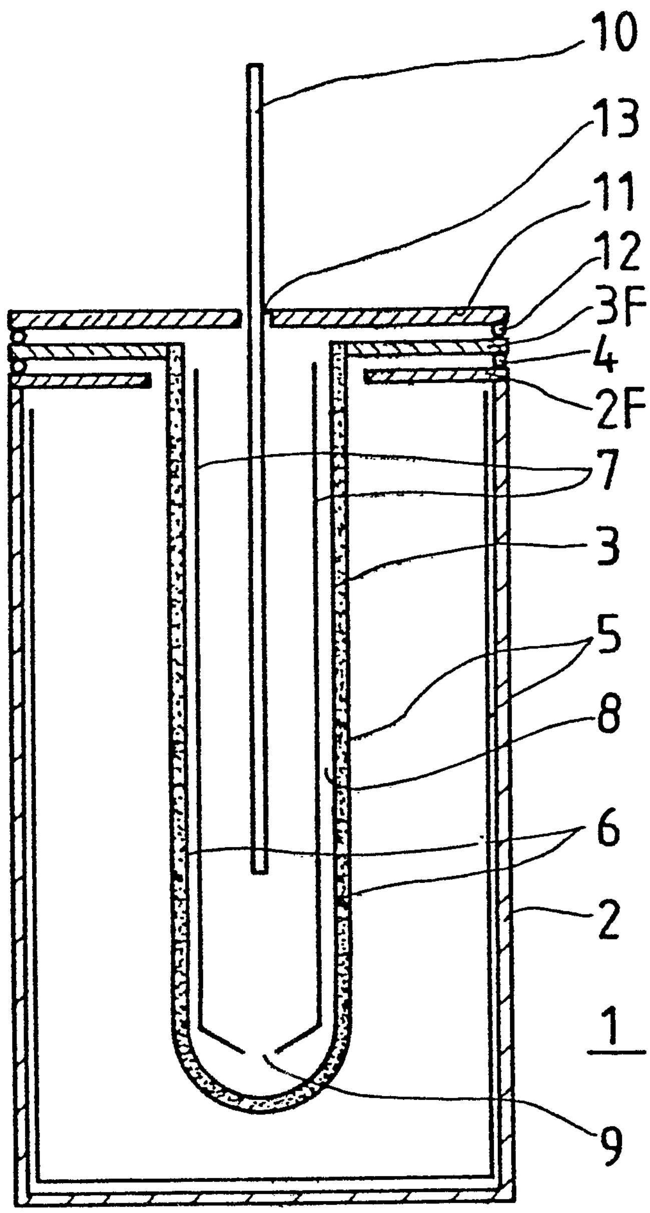
10
13
11
12
3F
4
2F
7
3
5
8
6
2
1
9